# EUROPÄISCHE PATENTANMELDUNG

(11) **EP 1 672 325 A2**
(43) Veröffentlichungstag der Anmeldung: **21.06.2006**
(21) Anmeldenummer: 05109744.2
(22) Anmeldetag: 19.10.2005
(51) Int. Cl.: G01D 5/245

(54) **Verfahren und Anordnung zur Erfassung von Kenngrößen bei Weg- oder Winkelsensoren**

(30) Priorität: 15.12.2004 DE 102004060299
(71) Anmelder: ROBERT BOSCH GMBH, 70442 Stuttgart (DE)
(72) Erfinder: Rettig, Rasmus, 70839, Gerlingen (DE); Zwiener, Guenter, 71263, Weil Der Stadt (DE); Schmidt-Grethe, Karsten, 74232, Abstatt (DE); Bauer, Christian, 71701, Schwieberdingen (DE)

(57) **Zusammenfassung**

Es wird ein Verfahren und eine Anordnung zur Erfassung von Kenngrößen bei Weg- oder Winkelsensoren vorgeschlagen, bei dem in einer Prüfprozedur Sensorsignale (10) in einem stationären Sensor (2) ausgewertet werden, die durch Abtasten von mehreren senkrecht zur Bewegungsrichtung nebeneinander liegenden Codeelementen (Z,L) auf einem Geberelement (1) als bewegtes Bauteil erzeugt werden. Die Prüfprozedur wird mit einem Geberelement (1) durchgeführt, das nach eine vorgegebene Variation der geometrischen Größen der Codeelemente (Z,L) aufweist. Insbesondere zur Erfassung des Luftspaltes (3) als Kenngröße, der zwischen einem magnetfeldempfindlichen Sensor (2) und einer Zahn-Lücken-Kontur (Z,L) als Codeelement auf dem Geberelement (1) auftritt, wird die Zahnhöhe und/oder die Lückenhöhe (Zi,Li; mit i=1...n) in einer vorgegebenen Folge variiert.

## Beschreibung

### Stand der Technik

Die Erfindung betrifft ein Verfahren und eine Anordnung zur Erfassung von Kenngrößen, insbesondere des Luftspaltes in Magnetsensoranordnungen, bei Weg- oder Winkelsensoren, nach der Gattung des Hauptanspruchs.

Es ist an sich bekannt, dass zur Erfassung von Drehzahlen oder Drehwinkeländerungen, zum Beispiel in Kraftfahrzeugen, Drehzahlsensoren für eine Raddrehzahlmessung, für Fahrdynamiksysteme oder auch in der Motorsteuerung zum Einsatz kommen. Diese Sensoren können beispielsweise eine Winkelstellung aufgrund von optisch, magnetisch oder sonst wie durch die Drehung erzeugten und mit geeigneten Mitteln detektierten Impulsen auswerten.

Insbesondere bei magnetischen Messverfahren ist eine Kenntnis des maximal zulässigen Luftspalts zwischen dem Geberelement und dem Sensor sehr wichtig um ein zuverlässiges Messverfahren zu erhalten. Der maximal zulässige Luftspalt ist bei den zuvor beschriebenen Anwendungen der Luftspalt, bei dem sichergestellt ist, dass unter allen Betriebsbedingungen jede mechanische bzw. magnetische Flanke beispielsweise eines mit Zahnflanken versehenen Geberrades vom Sensor erkannt und ausgegeben wird.

Bei der Herstellung von solchen Drehzahlsensoren wird üblicherweise für jeden produzierten Sensor ein definierter Prüfluftspalt zwischen dem Geberrad und dem Sensor eingestellt. Gibt der Sensor alle Flanken des Geberrades korrekt wieder, so ist das Ergebnis der Prüfung positiv. Der Prüfluftspalt wird dabei so gewählt, dass im sich anschließenden Betrieb die Funktion unter allen Randbedingungen sichergestellt ist.

Diese Prüfung ist üblicherweise als sogenannte Go/NoGo Prüfung ausgelegt und liefert keinerlei quantitative Informationen über den tatsächlich mit dem jeweiligen Sensor erreichbaren Luftspalt. Das beschriebene Go/NoGo Prüfverfahren wird jedoch in keiner Weise der Wichtigkeit des Luftspalts als Kenngröße in der Fertigung gerecht, da beispielsweise eine statistische Erfassung und gegebenenfalls eine Korrektur des Fertigungsprozesses hiermit nicht möglich ist.

### Vorteile der Erfindung

Bei den eingangs erwähnten Weg- oder Winkelsensoren, wird gemäß der Erfindung in vorteilhafter Weise eine Prüfprozedur durchgeführt, bei der Sensorsignale in einem stationären Sensor ausgewertet werden, die durch Abtasten von mehreren senkrecht zur Bewegungsrichtung nebeneinander liegenden Codeelementen auf einem Geberelement als bewegtes Bauteil erzeugt werden. Die Prüfprozedur wird dabei mit einem Geberelement durchgeführt, das eine vorgegebene Variation der geometrischen Größen der Codeelemente aufweist.

Bevorzugt dient das vorgeschlagene Verfahren zur Erfassung des Luftspaltes als Kenngröße, der zwischen einem magnetfeldempfindlichen Sensor und einer Zahn-Lücken-Kontur auf einem Geberelement auftritt, wobei die Zahnhöhe und/oder die Lückenhöhe nach dem vorgegebenen System variiert wird.

Mit der Erfindung ist in vorteilhafter Weise ein Prüfverfahren realisierbar, welches eine quantitative Bestimmung des erreichbaren Luftspaltes für jeden gefertigten Sensor ermöglicht. Die Dauer der Prüfprozedur wird hierbei nicht verlängert. Auf diese Weise ist es somit möglich, mit minimalem Zusatzaufwand den erreichbaren Luftspalt statistisch in der Fertigung zu erfassen und zur Kontrolle sowie zur Optimierung der Fertigungsprozesse zu nutzen.

Bei einer vorteilhaften Ausführungsform der Erfindung ist das Geberelement ein Geberrad und die Prüfprozedur erfolgt während einem über eine Indexmarkierung gekennzeichneten Radumlauf.

Eine Variante der Erfindung kann so gestaltet sein, dass die Variation der Zahnhöhe und/oder die Lückentiefe so ausgebildet ist, dass während der Prüfprozedur eine kontinuierliche Vergrößerung des Luftspaltes erfolgt. Besonders vorteilhaft ist es allerdings, wenn die Variation der Zahnhöhe und/oder die Lückentiefe so ausgebildet ist, dass während der Prüfprozedur eine gruppenweise Vergrößerung des Luftspaltes erfolgt; hier können beispielsweise jeweils vier Gruppen mit sich viermal wiederholenden Zahnhöhen und/oder Lückenhöhen auf dem Umfang des Geberrads während der Prüfprozedur angeordnet werden.

Bei einer vorteilhaften Anordnung zur Durchführung des zuvor beschriebenen Verfahrens ist ein Prüfaufbau vorhanden, der ein für die Prüfprozedur hergestelltes metallisches Geberrad anwendet, das auf dem Umfang die variierte Zahn-Lücken-Kontur aufweist. Die Zahn-Lücken-Kontur liegt über dem Luftspalt einem Drehzahlsensor gegenüber, wobei über ein Indexloch als Indexmarkierung der Beginn der Prüfprozedur festlegbar ist.

### Zeichnung

Ein Ausführungsbeispiel einer Anordnung zur Durchführung des erfindungsgemäßen Verfahrens wird anhand der Zeichnung erläutert. Es zeigen:
Figur 1 eine prinzipielle Anordnung eines magnetfeldempfindlichen Drehzahlsensors, der über einen Luftspalt einer Zahn-Lücken-Kontur eines Geberrades gegenüberliegt,
Figuren 2 und 3 jeweils eine Darstellung eines Geberrades für eine Prüfprozedur mit einer gruppenweisen Variation der Zahn-Lücken-Kontur des Geberades,
Figur 4 den Verlauf von Mess- und Sensorsignalen während einer Prüfprozedur bzw. eines Umlaufs des Geberrades nach der Figur 2 und
Figur 5 den Verlauf des magnetischen Differenzfeldes während der Prüfprozedur.

### Beschreibung des Ausführungsbeispiels

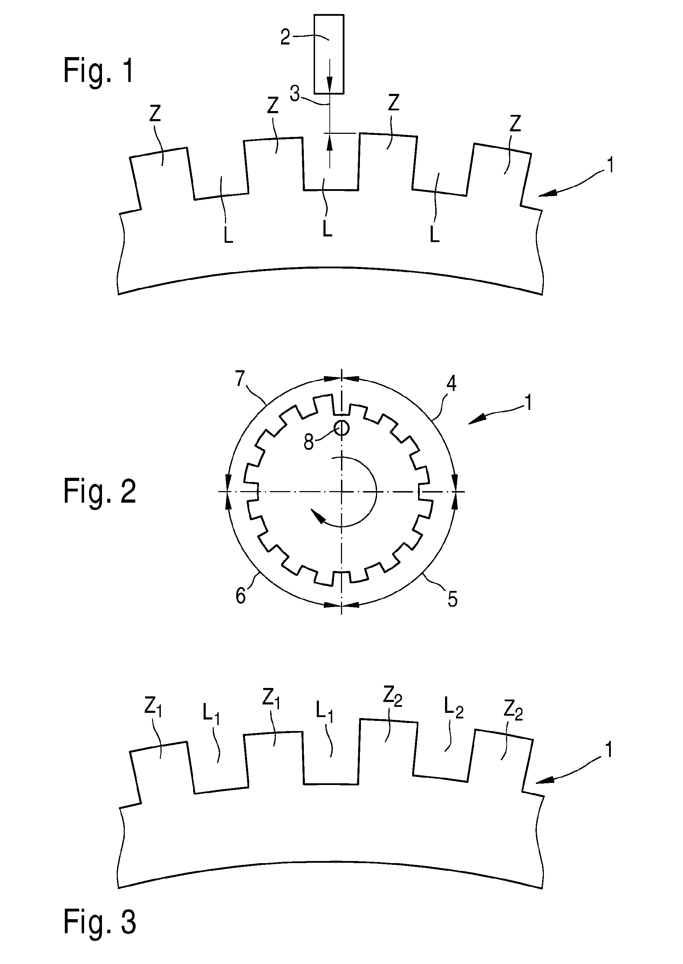

In Figur 1 ist in einer schematischen Ansicht ein Teil eines Geberrades 1 gezeigt, das auf dem Umfang mit einer Zahn-Lücken-Kontur Z,L versehen ist. Es ist weiterhin ein magnetfeldempfindlicher Sensor 2 als Drehzahlsensor vorhanden, der über einen Luftspalt 3 der Zahn-Lücken-Kontur Z,L gegenüberliegt. Beim Vorbeidrehen des Geberrades 1 unter dem Sensor 2 können die Schaltflanken ausgewertet werden, die durch die Feldbeeinflussung der Zahn-Lücken-Kontur Z,L ausgelöst werden, sofern die Größe des Luftspalt 3 die Generierung eines Sensorausgangssignals erlaubt.

In einem Prüfaufbau soll nun eine quantitative Auswirkung des Luftspaltes 3 durch Messung mit einem Geberrad 1 nach Figur 2 und Figur 3 durchgeführt werden, die mit einer beliebigen Sensorkonfiguration ausführbar ist. Das Geberrad 1 nach Figur 2 weist hierzu eine Variation der Zahn-Lücken-Kontur hinsichtlich der Höhe sowohl der Zähne Z als auch der Lücken L auf. Es sind bei diesem Geberrad 1 jeweils vier Perioden 4, 5, 6, und 7 mit jeweils vier annähernd gleichen Zähnen und Zahn-Lückenhöhen Z1,L1; Z2,L2; Z3,L3; Z4,L4 auf dem Umfang angeordnet. Darüber hinaus wird über ein Index-Loch 8 eine Indexmarkierung oder Referenzposition zum Beginn einer Prüfprozedur bzw. einer Umdrehung gesetzt. Der Beginn der Prüfprozedur kann dann beispielsweise durch eine Lichtschranke erfasst werden.

Aus Figur 3 sind im Detail noch jeweils eine Zahn-Lücken Gruppe mit Z1 und L1 sowie eine Gruppe mit den davon abweichenden Zahn-Lücken-Höhen Z2 und L2 zu entnehmen.

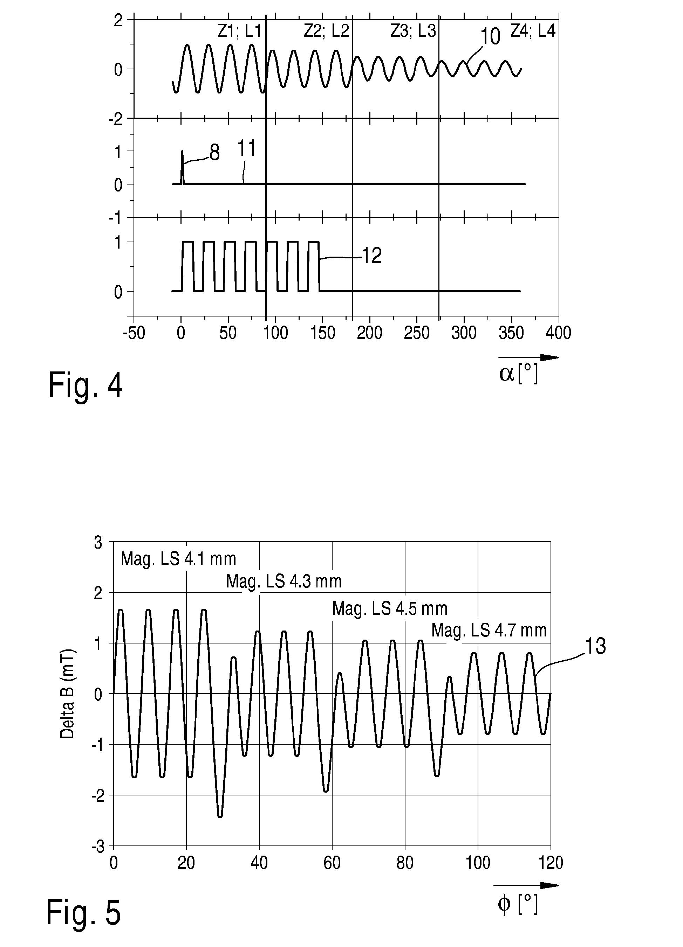

In Figur 4 sind das magnetische Feld 10, das Index-Signal 11 und das Ausgangssignal 12 des Sensors 2 über dem Drehwinkel α und einer Umdrehung des Geberrades 1 dargestellt. Die Variation der Zahn-Lücken-Kontur Z,L ist beim dargestellten Ausführungsbeispiel in einer Weise ausgeprägt, dass nach dem Durchfahren der Indexmarkierung 8 (Index-Signal 11) zunächst ein geringer Luftspalt 3 mit einer Zahn-Lückenhöhe Z1,L1 zwischen dem Sensor 2 und dem Geberrad 1 eingestellt ist. Beim Vorbeidrehen des Geberrades 1 wird durch Verringerung der Zahn-Lückenhöhe von Z2,L2 nach der Index-Position über Z3,L3 nach Z4,L4 ein sich vergrößernder Luftspalt 3 und es werden sich verringendere Feldschwankungen im Verlauf 10 erzeugt.

Die Ausgangssignale des Sensors 2 werden dabei mittels der Impulse 12 ausgewertet. Sobald eine Flanke oder ein Impuls als Ausgangssignal des Sensors 2 fehlt, wird die Zeit seit dem Passieren der Indexmarkierung 8 oder alternativ der Drehwinkel α gespeichert. Eine konstante Rotationsgeschwindigkeit des Geberrades 1 vorausgesetzt, ist damit eine eindeutige Zuordnung zum Luftspalt 3 und damit zur magnetischen Amplitude 10 möglich.

Bei der Auslegung des Variation der Zahn-Lücken-Kontur des Geberrades 1 über den Umfang können sensorinterne Kalibrieralgorithmen berücksichtigt werden. Beim Ausführungsbeispiel nach der Figur 2 mit jeweils vier Perioden mit vier identische Zahn-Lücken-Paaren kann sich der Sensor 2 mit interner Adaption auf die magnetische Stimulation jeweils adaptieren, bevor der Luftspalt 3 künstlich weiter erhöht wird. Weiterhin wird durch die Wiederholung identischer Zahn-Lücken-Paare die Aussagesicherheit der Messung verbessert.

Bei der Prüfprozedur nach der Figur 4 liefert der Sensor 2 bis zur Winkelposition α=150° korrekte Signale und fällt erst bei einem Luftspalt 3 entsprechend Z2,L2 aus, während Z1,L1 noch korrekt ausgewertet wird.

In Figur 5 ist noch der simulierte Verlauf 13 des Differenzmagnetfeldes Delta B für einen differentiellen Magnetfeldsensor 2 mit Luftspalthöhen von 4,1 mm, 4,3 mm, 4,5, und 4,7 mm gezeigt. Hieraus ist der Einfluss ersichtlich, den die nichtideale Periodizität des Geberrades 1 am Anfang und Ende einer jeden der vier Gruppen ausübt. Dies kann bei der Gestaltung für die Prüfung konstruierten Geberrades 1 entsprechend berücksichtigt werden. Durch eine Änderung der Zahn-Lücken-Kontur Z,L beim Wechsel zwischen den Gruppen lassen sich die hier erkennbaren Über- und Unterschwinger in ihrer Amplitude minimieren.

## Patentansprüche

1. Verfahren zur Erfassung von Kenngrößen bei Weg- oder Winkelsensoren, bei dem
- in einer Prüfprozedur Sensorsignale (10) in einem stationären Sensor (2) ausgewertet werden, die durch Abtasten von mehreren senkrecht zur Bewegungsrichtung nebeneinander liegenden Codeelementen (Z,L) auf einem Geberelement (1) als bewegtes Bauteil erzeugt werden und bei dem
- die Prüfprozedur mit einem Geberelement (1) durchgeführt wird, das eine vorgegebene Variation der geometrischen Größen der Codeelemente (Zi,Li; mit i=1..n) aufweist.

2. Verfahren nach Anspruch 1, **dadurch gekennzeichnet, dass**
- zur Erfassung des Luftspaltes (3) als Kenngröße, der zwischen einem magnetfeldempfindlichen Sensor (2) und einer n-fachen Zahn-Lücken-Kontur (Zi,Li; mit i=1...n) als Codeelement auf dem Geberelement (1) auftritt, die Zahnhöhe (Zi) und/oder die Lückenhöhe (Li) in einer vorgegebenen Folge variiert wird.

3. Verfahren nach Anspruch 2, **dadurch gekennzeichnet, dass**
- das Geberelement ein Geberrad (1) ist und die Prüfprozedur während eines mittels einer Indexmarkierung (8) gestarteten Radumlaufs erfolgt.

4. Verfahren nach Anspruch 2 oder 3, **dadurch gekennzeichnet, dass**
- die Variation der Zahnhöhe und/oder die Lückenhöhe (Z,L) so ausgebildet ist, dass während der Prüfprozedur eine kontinuierliche Verringerung des Luftspaltes (3) durch steigende Zahn- und Lückenhöhen (Zi,Li) erfolgt.

5. Verfahren nach Anspruch 2 oder 3, **dadurch gekennzeichnet, dass**
- die Variation der Zahnhöhe und/oder die Lückenhöhe (Z,L) so ausgebildet ist, dass während der Prüfprozedur eine kontinuierliche Vergrößerung des Luftspaltes (3) durch fallende Zahn- und Lückenhöhen (Zi,Li) erfolgt.

6. Verfahren nach einem der Ansprüche 2 bis 5, **dadurch gekennzeichnet, dass**
- die Variation der Zahnhöhe und/oder die Lückenhöhe (Zi,Li) so ausgebildet ist, dass während der Prüfprozedur (m) Gruppen von (n) identischen Zahn-Lückenhöhen (Zi,Li) gebildet werden.

7. Verfahren nach Anspruch 6, **dadurch gekennzeichnet, dass**
- jeweils m=4 Gruppen mit sich n=4 mal wiederholenden Zahnhöhen und/oder Lückenhöhen (Zi,Li) auf dem Umfang des Geberrads (1) während der Prüfprozedur angeordnet sind.

8. Verfahren nach einem der Ansprüche 3 bis 7, **dadurch gekennzeichnet, dass**
- dass nach dem Durchfahren der Indexmarkierung (8) zunächst ein geringer Luftspalt (3) mit einer ersten Zahn-Lückenhöhe (Zi,Li; mit i=1) zwischen dem Sensor (2) und dem Geberrad (1) eingestellt ist, dass
- sich beim Vorbeidrehen des Geberrades (1) durch Verringerung der folgenden Zahn-Lückenhöhen (Zi,Li) ein sich vergrößernder Luftspalt (3) ergibt und dass
- durch die sich verringenden Feldschwankungen am Sensor (2) mittels einer Auswertung der Impulse (12) am Ausgang des Sensors (2) das Ausbleiben der Impulse erfasst wird und die Zeit oder der Drehwinkel (α) seit dem Passieren der Indexmarkierung (8) gespeichert wird.

9. Verfahren nach Anspruch 8, **dadurch gekennzeichnet, dass**
- mittels einer Anpassung der Zahn-Lücken-Kontur (Zi,Li) am Anfang und am Ende der (m) Gruppen Über- und Unterschwinger in ihrer Amplitude minimiert werden.

10. Anordnung zur Durchführung eines Verfahrens nach einem der vorhergehenden Ansprüche, **dadurch gekennzeichnet, dass**
- ein Prüfaufbau vorhanden ist, mit einem für die Prüfprozedur hergestellten metallischen Geberrad (1), das auf dem Umfang die variierte Zahn-Lücken-Kontur (Z,L) aufweist, wobei diese über den Luftspalt (3) einem Drehzahlsensor (2) gegenüberliegt und dass über ein Indexloch (8) der Beginn der Prüfprozedur festlegbar ist.
